# EUROPEAN PATENT APPLICATION

(11) **EP 2 660 711 A1**
(43) Date of publication of application: **06.11.2013**
(21) Application number: 13166506.9
(22) Date of filing: 03.05.2013
(51) Int. Cl.: G06F 3/14

(54) **Presentation system, receiver device, methods thereof, and computer-readable medium thereof**

(30) Priority: 04.05.2012 TW 101115965
(71) Applicant: Awind Inc., 235 New Taipei City (TW)
(72) Inventor: Chang, Kuo-Lung, 235 New Taipei City (TW); Fan, Jr-Rong, 235 New Taipei City (TW); Tu, Ping-Yang, 235 New Taipei City (TW); Wang, Hsing-Yung, 235 New Taipei City (TW)
(74) Representative: Viering, Jentschura & Partner

(57) **Abstract**

A presentation method comprises: a sender device capturing screen frames and transmitting the screen frames to a receiver device; the receiver device receiving the screen frames transmitted by the sender device and outputting the screen frames to a display device for displaying the screen frames; establishing a webpage server in the receiver device; and the receiver device storing the screen frames as web pages. Thereby, the audiences can use the browsers of mobile Internet devices to link with the webpage server and browse the web pages containing the presentation contents.

## Description

### BACKGROUND OF THE INVENTION

### 1. FIELD OF THE INVENTION

The present invention relates to a presentation system, a receiver device and methods thereof, particularly to a presentation system, a receiver device and methods thereof, wherein the user can use a browser to view the web pages containing the presentation contents.

### 2. DESCRIPTION OF THE PRIOR ART

The conventional presentation system captures the screen frames of presentation pages, which is to be presented, and transmits the captured screen frames to a display device, such as a projector or a television. Then, the display device presents the presentation pages to the audiences. In a large-scale presentation occasion, the audiences do not necessarily view the presentation contents clearly because of poor image quality of the projector, insufficient resolution of the display device, and/or too long a distance between the audiences and the screen.

Recently, mobile internet devices (MID), such as smart phones and tablet computers, have been popularized very fast. Therefore, it has become a target the manufacturers are eager to achieve that the audiences can use MID or other network devices having a display to view the presentation contents.

### SUMMARY OF THE INVENTION

The present invention is directed to a presentation system, a receiver device, methods thereof and a computer-readable medium thereof, wherein the sender side transmits the screen frames to the receiver side, and wherein the receiver side stores the screen frames as web pages, and wherein a webpage server is established in the receiver side for the mobile Internet devices or other network devices of the audiences attending the presentation to link, whereby the audiences can view the web pages containing the presentation contents.

In first embodiment, the proposed presentation system includes a sender device and a receiver device. The sender device includes a capture module and a first communication interface. The capture module is configured for capturing screen frames. The first communication interface electrically connects with the capture module and is configured for transmitting the screen frames captured by the capture module. The receiver device includes a second communication interface, a video connection interface, a webpage server, and a network interface. The second communication interface is configured for receiving the screen frames transmitted by the sender device. The video connection interface is configured for electrically connecting with a display device. The received screen frames are output to the display device via the video connection interface and presented on the display device. The webpage server stores the received screen frames as web pages. The network interface electrically connects with the webpage server, so that a browser can link to the webpage server via the network interface for browsing the web pages of the webpage server.

In second embodiment, the proposed receiver device, which cooperates with a sender device to form a presentation system. The sender device captures screen frames and transmits the captured screen frames to the receiver device. The receiver device includes a communication interface, a video connection interface, a webpage server, and a network interface. The communication interface is configured for receiving the screen frames transmitted by the sender device. The video connection interface is configured for electrically connecting with a display device. The received screen frames are output to the display device via the video connection interface and presented on the display device. The webpage server stores the received screen frames as web pages. The network interface electrically connects with the webpage server, so that a browser can link to the webpage server via the network interface for browsing the web pages of the webpage server.

In third embodiment, the proposed presentation method comprises: a sender device capturing screen frames and transmitting the screen frames to a receiver device; the receiver device receiving the screen frames and outputting the screen frames to a display device for displaying the screen frames; establishing a webpage server in the receiver device; the receiver device storing the screen frames as web pages, which are to be browsed by a browser linked to the webpage server.

In fourth embodiment, the proposed method for displaying presentation contents comprises: a receiver device receiving screen frames captured by a sender device and outputting the received screen frames to a display device for presenting the screen frames; establishing a webpage server in the receiver device; the receiver device storing the received screen frames as web pages, which are browsed by a browser linked to the webpage server.

In fifth embodiment, the proposed computer-readable medium, which stores a computer program that is loaded into a receiver device to execute a method for displaying presentation contents, wherein the method for displaying presentation contents comprises: a receiver device receiving screen frames captured by a sender device and outputting the received screen frames to a display device for presenting the screen frames; establishing a webpage server in the receiver device; the receiver device storing the received screen frames as web pages, which are browsed by a browser linked to the webpage server.

The objective, technologies, features and advantages of the present invention will become apparent from the following description in conjunction with the accompanying drawings wherein certain embodiments of the present invention are set forth by way of illustration and example.

### BRIEF DESCRIPTION OF THE DRAWINGS

The foregoing conceptions and their accompanying advantages of this invention will become more readily appreciated after being better understood by referring to the following detailed description, in conjunction with the accompanying drawings, wherein:

Fig.1 is a block diagram schematically showing a presentation system according to one embodiment of the present invention;

Fig.2 is a flowchart schematically showing a presentation method according to one embodiment of the present invention; and

Fig.3 is a flowchart schematically showing a method for displaying presentation contents according to one embodiment of the present invention.

### DESCRIPTION OF THE PREFERRED EMBODIMENT

The detailed explanation of the present invention is described as follows. The described preferred embodiments are presented for purposes of illustrations and description, and they are not intended to limit the scope of the present invention.

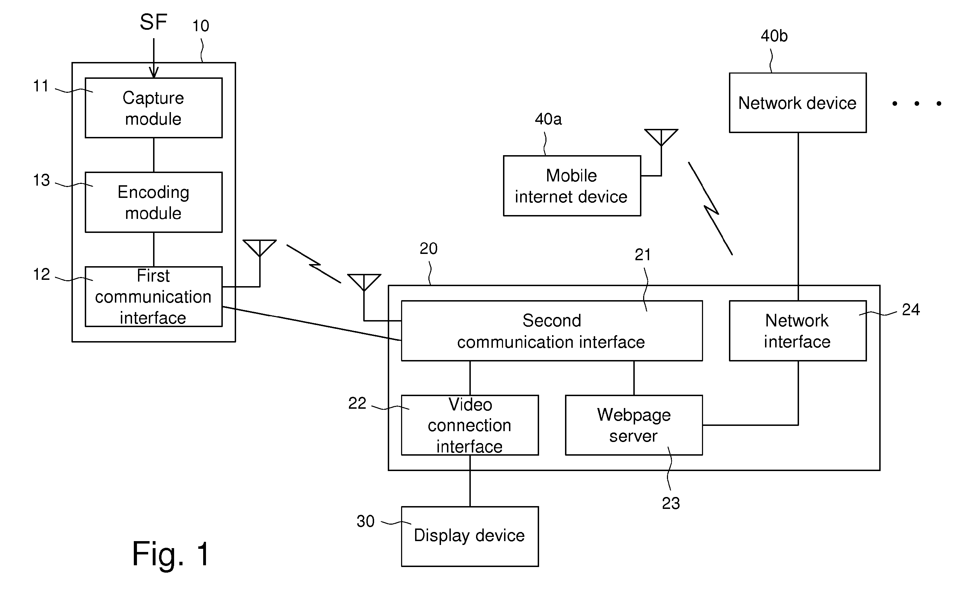

Refer to Fig.1 a block diagram schematically showing a presentation system according to one embodiment of the present invention. The presentation system of the present invention comprises a sender device 10 and a receiver device 20. The sender device 10 includes a capture module 11 and a first communication interface 12. The capture module 11 captures screen frames SF. For example, the capture module 11 obtain lossless screen frames from a computer undertaking a presentation by the operating system through a software program. The first communication interface 12 electrically connects with the capture module 11 and transmits the screen frames SF captured by the capture module 11 to the receiver device 20. For example, the first communication interface 12 may be a wired network interface or a wireless network interface. Preferably, the first communication interface 12 abides by IEEE 802.11 wireless communication standard series.

In one embodiment, the sender device 10 further includes an encoding module 13 electrically connecting with the capture module 11 and the first communication interface 12. Owing to limitation in bandwidth, the encoding module 13 encodes the screen frames SF captured by the capture module 11 to reduce the data volume before data transmission.

The receiver device 20 includes a second communication interface 21, a video connection interface 22, a webpage server 23, and a network interface 24. The second communication interface 21 works according to a communication protocol corresponding to the first communication interface 12 to receive the non-encoded or encoded screen frames SF transmitted by the sender device 10. The video connection interface 22 electrically connects with a display device 30. The screen frames received by the second communication interface 21 is outputted through the video connection interface 22 to the display device 30 and presented on the display device 30. It should be noted that the receiver device 20 may be built in the display device 30 or electrically connected with the display device 30 in a detachable way. For example, the video connection interface 22 may be a VGA (Video Graphic Array) port, DVI (Digital Visual Interface), or HDMI (High Definition Multimedia Interface) etc.

The webpage server 23 may store a screen frame as a web page. For example, a screen frame may be stored in a storage element, such as an RAM (Random Access Memory), a flash memory or a hard disc, of the receiver device 20, and a fixed access path is assigned to the screen frame. Thus, the webpage server 23 can retrieve the web page containing the screen frame according to the access path. The network interface 24 electrically connects with the webpage server 23. The audiences attending the presentation may use the browser of a mobile Internet device 40a (such as a smart phone or a tablet computer) or another network device 40b to establish a network link to the webpage server 23 through the network interface 24 so as to browse the web page containing the screen frame of the presentation. In one embodiment, the second communication interface 21 and the network interface 24 can be integrated together. For example, only a single WLAN (wireless Local Area Network) interface based on the IEEE 802.11 wireless communication standard series is sufficient to receive the screen frames SF sent out by the sender device 10 and the browsing request sent out by the mobile Internet device 40a or another network device 40b.

According to the above framework, the host organization of presentation can provide the IP address of the webpage server 23 for the audiences at the entrances, beside the seats or on the presentation image. Then, the audiences can use the mobile Internet device 40a or another network device 40b including monitor to browse the presentation pages being displayed without installing any specified program. Thereby, although the speaker neither sets up a webpage server nor prepares the web pages of the presentation contents, the audiences can still browse the presentation contents synchronously.

In one embodiment, the sender device 10 can be programmed to determine whether the screen frames SF are released to the public or not. For example, if the speaker deems that it is unsuitable to issue the presentation contents to the public because of copyright or other factors, he can control the sender device 10 to generate a corresponding signal to prevent the screen frames from being stored as web pages by the receiver device 20.

In one embodiment, the sender device 10 captures and transmits screen frames SF periodically. For example, the sender device 10 captures and transmits screen frames SF for a period of 1, 3, 5, or 10 seconds or a long interval of time. In one embodiment, the sender device 10 transmits static screen frames SF aperiodically. For example, the sender device 10 captures screen frames SF periodically; if the screen frame does not change for a given period of time, the screen frame is defined as a static screen frame and transmitted to the receiver device 20. In one embodiment, the sender device 10 detects whether the captured screen frame changes; if the captured screen frame is changed (such as by changing the slide), the sender device 10 transmits the changed screen frame to the receiver device 20. In one embodiment, if the screen frame is changed only in some regions, the sender device 10 only transmits the changed regions to the receiver device 20; the receiver device 20 uses the changed regions to refresh the screen frame; then the receiver device 20 transmits the refreshed screen frame to the display device 30 or stores the refreshed screen frame as a web page.

In one embodiment, the webpage server 23 includes an automatic refresh module (not shown in the drawings). The automatic refresh module can automatically refresh the web page browsed by the user in the user side. For example, a refreshing period can be set in the web page. For example, the web page is refreshed per 30 second or per 60 seconds. Thus, the browser in the user side refreshes the web page being browsed by the user per 30 seconds or per 60 seconds. Alternatively, while the web page stored in the webpage server 23 is changed, the webpage server 23 actively refreshes the web page being browsed by the browser linked to the webpage server 23.

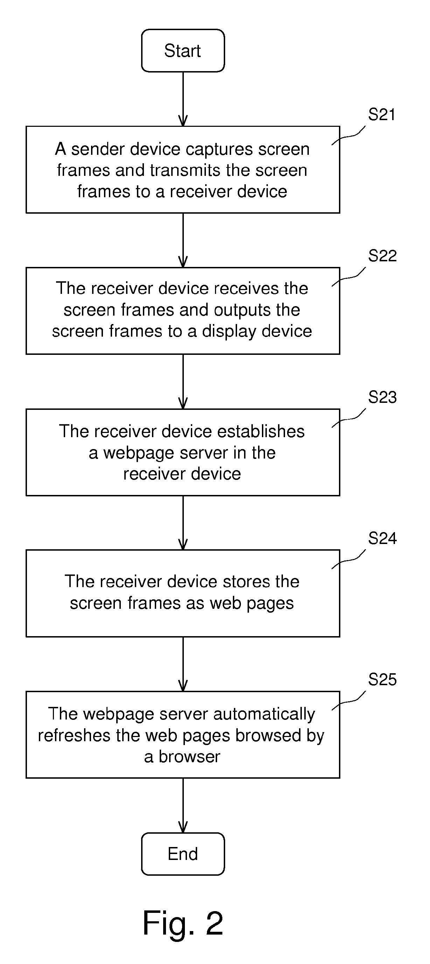

Below is described a presentation method according to one embodiment of the present invention. Refer to Fig.1 and Fig.2. Firstly, in Step S21, a sender device 10 captures a screen frame SF and transmits the screen frame SF to a receiver device 20. In Step S22, the receiver device 20 receives the screen frame SF transmitted by the sender device 20 and outputs the screen frame SF to a display device 30 for displaying the screen frame SF. In Step S23, a webpage server 23 is established in the receiver device 20. In Step S24, the receiver device 20 stores the screen frame transmitted by the sender device 10 as a web page, which can be browsed by a user-side browser linked to the webpage server 23. In one embodiment, the presentation method of the present invention further comprises Step S25: the webpage server 23 automatically refreshes the web page being browsed by the browser, which has been described hereinbefore and will not repeat herein.

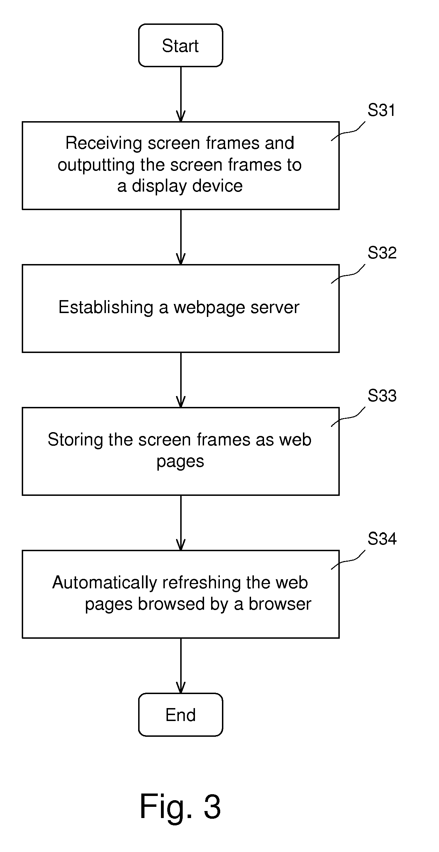

Below is described a method for displaying presentation contents, which is applied to a receiver device. Refer to Fig.1 and Fig.3. Firstly, in Step S31, a receiver device 20 receives a screen frame SF captured by a sender device 10 and outputs the screen frame SF to a display device 30 for displaying the screen frame SF. In Step S32, a webpage server 23 is established in the receiver device 20. In Step S33, the receiver device 20 stores the screen frame SF transmitted by the sender device 10 as a web page, which can be browsed by a user-side browser linked to the webpage server 23. In one embodiment, the method for displaying presentation contents of the present invention further comprises Step S34: the webpage server 23 automatically refreshes the web page being browsed by the browser, which has been described hereinbefore and will not repeat herein.

The present invention also discloses a computer-readable medium. The computer-readable medium stores a computer program, which can be loaded into a receiver device to execute the method for displaying presentation contents shown in Fig.3, which has been described hereinbefore and will not repeat herein.

In conclusion, the present invention proposes a presentation system, a receiver device, and methods thereof, wherein the sender side transmits screen frames to the receiver side, and wherein the receiver side stores the screen frames as web pages, and wherein a webpage server is established in the receiver side. The audiences attending the presentation can use the common browsers of mobile Internet devices or other network devices to link with the webpage server of the receiver side and browse the web pages containing the presentation contents without installing extra software. In a video teleconference, the audiences not only can use the video teleconference system to view the countenance and motion of the speaker but also can use the available network devices (such as computers) to link with the webpage server and browse the presentation contents.

While the invention is susceptible to various modifications and alternative forms, a specific example thereof has been shown in the drawings and is herein described in detail. It should be understood, however, that the invention is not to be limited to the particular form disclosed, but to the contrary, the invention is to cover all modifications, equivalents, and alternatives falling within the spirit and scope of the appended claims.

## Claims

1. A presentation system comprising:
a sender device including:
a capture module configured for capturing screen frames; and
a first communication interface electrically connecting with said capture module and configured for transmitting said screen frames; and
a receiver device including:
a second communication interface configured for receiving said screen frames;
a video connection interface configured for electrically connecting with a display device, wherein said screen frames are output to said display device through said video connection interface;
a webpage server configured for storing said screen frames as web pages; and
a network interface electrically connecting with said webpage server, wherein a browser is linked to said webpage server through said network interface for browsing said web pages.

2. The presentation system according to claim 1, wherein said sender device further determines whether said screen frame is used as said web page.

3. The presentation system according to claim 1, wherein said sender device periodically transmits said screen frames, or aperiodically transmits said screen frames that are static, or detects whether said screen frames change and transmits said screen frames that have been changed to said receiver device.

4. The presentation system according to claim 1, wherein said webpage server includes an automatic refresh module configured for automatically refreshing said web pages browsed by said browser.

5. A receiver device, which cooperates with a sender device to form a presentation system, wherein said sender device captures screen frames and transmits said screen frames to said receiver device, and wherein said receiver device comprises:
a communication interface configured for receiving said screen frames transmitted by said sender device;
a video connection interface configured for electrically connecting with a display device, wherein said screen frames are output to said display device through said video connection interface;
a webpage server configured for storing said screen frames as web pages; and
a network interface electrically connecting with said webpage server, wherein a browser is linked to said webpage server through said network interface for browsing said web pages.

6. The receiver device according to claim 5, wherein said webpage server includes an automatic refresh module configured for automatically refreshing said web pages browsed by said browser.

7. The receiver device according to claim 5, wherein said receiver device is built in said display device or coupled to said display device in a detachable way.

8. A presentation method comprising:
a sender device capturing screen frames and transmitting said screen frames to a receiver device;
said receiver device receiving said screen frames and outputting said screen frames to a display device for displaying said screen frames;
establishing a webpage server in said receiver device; and
said receiver device storing said screen frames as web pages, which are to be browsed by a browser linked to said webpage server.

9. The presentation method according to claim 8, wherein said sender device further determines whether said screen frames is used as said web page.

10. The presentation method according to claim 8, wherein said sender device periodically transmits said screen frames, or aperiodically transmits said screen frames that are static, or detects whether said screen frames change and transmits said screen frames that have been changed to said receiver device.

11. The presentation method according to claim 8 further comprising:
said webpage server automatically refreshing said web pages browsed by said browser.

12. A method for displaying presentation contents, comprising:
a receiver device receiving screen frames captured by a sender device and outputting said screen frames to a display device for displaying said screen frames;
establishing a webpage server in said receiver device; and
said receiver device storing said screen frames as web pages, which are to be browsed by a browser linked to said webpage server.

13. The method for displaying presentation contents according to claim 12 further comprising: said webpage server automatically refreshing said web pages browsed by said browser.

14. A computer-readable medium, which stores a computer program that is loaded into a receiver device to execute a method for displaying presentation contents, wherein said method for displaying presentation contents comprises:
a receiver device receiving screen frames captured by a sender device and outputting said screen frames to a display device for displaying said screen frames;
establishing a webpage server in said receiver device; and
said receiver device storing said screen frames as web pages, which are to be browsed by a browser linked to said webpage server.

15. The computer-readable medium according to claim 14, wherein said method for displaying presentation contents further comprises: said webpage server automatically refreshing said web pages browsed by said browser.
